# FASCICULE DE BREVET EUROPEEN

(11) **EP 3 456 633 B1**
(45) Date de publication et mention de la délivrance du brevet: **22.01.2020**
(21) Numéro de dépôt: 18180667.0
(22) Date de dépôt: 29.06.2018
(51) Int. Cl.: B64D 13/08

(54) **DISPOSITIF D'ECHANGE THERMIQUE COMPACT INCORPORE DANS UN MAT D'AERONEF**
KOMPAKTE WÄRMEAUSTAUSCHVORRICHTUNG, DIE IN EINEN MAST EINES LUFTFAHRZEUGS INTEGRIERT IST
COMPACT HEAT-EXCHANGE DEVICE INCORPORATED IN AN AIRCRAFT STRUT

(30) Priorité: 14.09.2017 FR 1758521
(43) Date de publication de la demande: 20.03.2019
(73) Titulaire: Airbus Operations S.A.S., 31060 Toulouse (FR)
(72) Inventeur: SOULIE, Adeline, 82600 VERDUN SUR GARONNE (FR); COMBES, Stéphane, 31660 BUZET SUR TARN (FR); GELIOT, Jean, 31400 TOULOUSE (FR); ORTEU, Benoit, 31000 TOULOUSE (FR); DEFORET, Thomas, 31300 TOULOUSE (FR)
(74) Mandataire: Gicquel, Olivier Yves Gérard

(56) Documents cités:
- EP-A1- 3 048 047
- EP-A2- 2 476 881

## Description

La présente demande se rapporte à un mât d'aéronef comprenant un dispositif d'échange thermique.

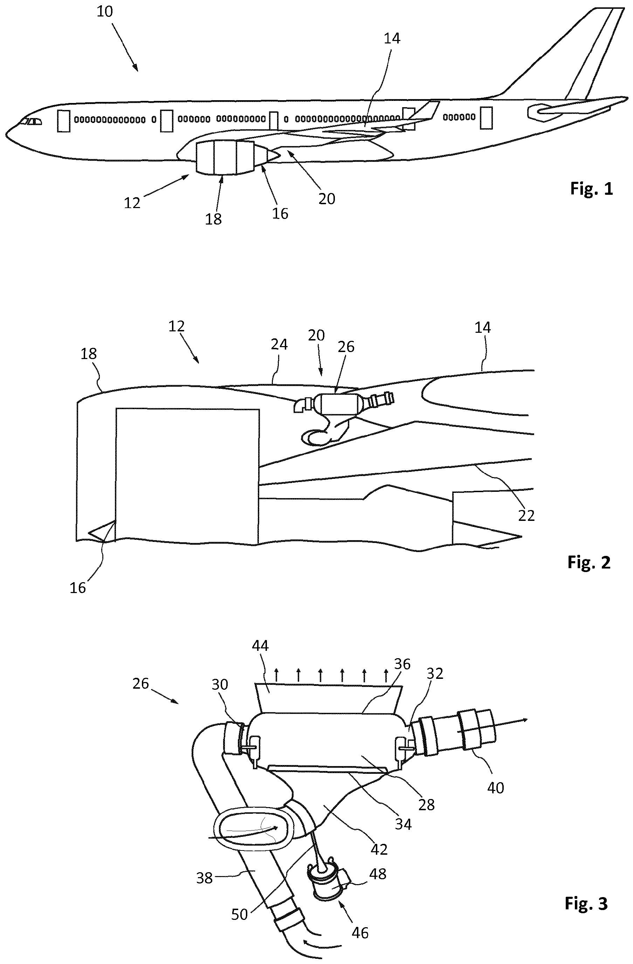

Selon une configuration visible sur les figures 1 et 2, un aéronef 10 comprend plusieurs ensembles moteurs 12 positionnés sous la voilure 14.

Comme illustré sur la figure 2, un ensemble moteur 12 comprend :
- un moteur 16 dans lequel circule un flux primaire d'air,
- une nacelle 18 positionnée autour du moteur 16 de manière à délimiter avec ce dernier un conduit annulaire dans lequel s'écoule un flux secondaire d'air froid, et
- un mât 20 qui assure la liaison entre le moteur 16 et la voilure 14.

Le mât 20 comprend une structure primaire 22 rigide, qui assure entre autres la transmission des efforts entre le moteur 16 et le reste de l'aéronef 10, et une structure secondaire 24 qui enveloppe la structure primaire 22 et qui limite la traînée du mât 20.

Comme illustré sur les figures 2 et 3, chaque ensemble moteur 12 comprend au moins un dispositif d'échange thermique 26 configuré pour refroidir de l'air chaud prélevé au niveau des étages de compression du moteur 16 et destiné aux systèmes de climatisation et de pressurisation de l'aéronef et/ou de dégivrage de la voilure.

Selon un mode de réalisation, chaque dispositif d'échange thermique 26 comprend :
- un échangeur thermique 28 qui a une forme parallélépipédique et qui présente un premier circuit d'air chaud reliant une première entrée 30 et une première sortie 32 ainsi qu'un deuxième circuit d'air froid reliant une deuxième entrée 34 et une deuxième sortie 36,
- un conduit d'alimentation en air chaud 38 qui est configuré pour prélever de l'air chaud au niveau du moteur 16 et qui est connecté à la première entrée 30,
- un conduit de sortie d'air chaud 40 connecté à la première sortie 32,
- un conduit d'alimentation en air froid 42 qui est configuré pour prélever de l'air froid dans le flux secondaire et qui est connecté à la deuxième entrée 34,
- un conduit d'échappement 44 qui est configuré pour rejeter de l'air à l'extérieur de l'aéronef et qui est connecté à la deuxième sortie 36.

Pour réguler la température de l'air chaud, le dispositif d'échange thermique 26 comprend un système de régulation 46 configuré pour ajuster le débit de l'air froid et positionné en amont de l'échangeur thermique 28, au niveau du conduit d'alimentation en air froid 42.

Ce système de régulation 46 comprend :
- un obturateur (non représenté) positionné à l'intérieur du conduit d'alimentation en air froid 42, mobile en rotation autour d'un axe de pivotement transversal (qui s'étend selon un diamètre du conduit d'alimentation en air froid 42) entre une position fermée dans laquelle il obture le conduit d'alimentation en air froid 42 et des positions plus ou moins ouvertes dans lesquelles il autorise un flux d'air avec un débit plus ou moins important à circuler dans le conduit d'alimentation en air froid 42,
- un actionneur 48 configuré pour contrôler la position de l'obturateur, qui comprend un arbre de sortie 50 accouplé à l'axe de pivotement de l'obturateur.

L'échangeur thermique 28 et le système de régulation 46 sont positionnés dans une zone située au-dessus de la structure primaire 22 et au-dessous de la structure secondaire 24 du mât.

L'obturateur doit être positionné au niveau d'une portion du conduit d'alimentation en air froid 42 avec une section sensiblement constante qui autorise son pivotement. Par conséquent, l'obturateur est écarté de l'échangeur thermique 28, ce qui tend à augmenter l'encombrement du dispositif d'échange thermique.

L'actionneur 48 et son arbre de sortie 50 sont positionnés selon une direction perpendiculaire à la direction du conduit d'alimentation en air froid 42 ce qui tend également à augmenter l'encombrement du dispositif d'échange thermique.

Or, les moteurs des aéronefs ont des diamètres de plus en plus gros et sont positionnés au plus près de la voilure pour améliorer les performances aérodynamiques et pour conserver une garde au sol minimale. Par conséquent, la zone située au-dessus de la structure primaire 22 et au-dessous de la structure secondaire 24 du mât est de plus en plus restreinte ce qui tend à complexifier l'intégration du dispositif d'échange thermique.

Un dispositif d'échange thermique qui montre les caractéristiques du préambule de la revendication 1 est décrit dans le document EP 2 476 881 A2.

La présente invention vise à remédier à tout ou partie des inconvénients de l'art antérieur.

A cet effet, l'invention a pour objet un mât d'aéronef comprenant un dispositif d'échange thermique comportant :
- un échangeur thermique qui comprend un premier circuit d'air chaud reliant une première entrée et une première sortie ainsi qu'un deuxième circuit d'air froid reliant une deuxième entrée et une deuxième sortie prolongée par un conduit d'échappement,
- un système de régulation configuré pour ajuster un débit d'un flux d'air circulant dans le deuxième circuit d'air froid de l'échangeur thermique qui comprend :
   o un obturateur configuré pour occuper un état fermé dans lequel il empêche la circulation du flux d'air et des états plus ou moins passants dans lesquels il autorise la circulation du flux d'air avec un débit plus ou moins important,
   o un actionneur configuré pour contrôler l'état de l'obturateur.

Selon l'invention, l'obturateur comprend une pluralité de volets, chacun des volets comprenant un axe de pivotement, les axes de pivotement des différents volets étant parallèles entre eux et sécants avec la direction du flux d'air, les volets étant simultanément mobiles en rotation autour de leur axe de pivotement entre une position fermée dans laquelle les volets sont jointifs, ce qui correspond à l'état fermé de l'obturateur, et une position ouverte dans laquelle les volets sont écartés, ce qui correspond à l'état passant de l'obturateur.

Le fait de prévoir plusieurs volets permet de réduire l'épaisseur de l'obturateur et de le rapprocher au plus près de l'échangeur thermique. Ainsi, on obtient un ensemble compact. Selon une autre caractéristique, l'obturateur est positionné en aval de l'échangeur thermique.

Selon une configuration,
- la deuxième sortie de l'échangeur thermique a une section carrée ou rectangulaire,
- l'obturateur comprend un cadre positionné entre la deuxième sortie et le conduit d'échappement, ledit cadre présentant deux parois longitudinales et deux parois transversales, tout en ayant une section de passage sensiblement identique à celle de la deuxième sortie de l'échangeur thermique, et
- les extrémités des axes de pivotement des volets sont montées pivotantes par rapport aux parois longitudinales du cadre.

Selon une autre caractéristique, l'obturateur comprend, pour chaque volet, un bras s'étendant selon une direction perpendiculaire à l'axe de pivotement et présentant une première extrémité reliée de manière rigide à l'une des extrémités de l'axe de pivotement du volet, tous les bras des différents volets étant reliés à une même tringle qui est reliée à l'actionneur.

Selon une configuration, l'actionneur est configuré pour déplacer la tringle selon une direction de déplacement qui est approximativement parallèle à une portion d'un conduit d'alimentation reliée à la première entrée et/ou une portion d'un conduit de sortie d'air chaud reliée à la première sortie, la tringle et l'actionneur étant disposés selon une direction parallèle à la direction de déplacement.

L'invention a également pour objet un aéronef qui comprend un mât d'aéronef selon l'invention.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale partielle d'un ensemble moteur qui illustre un mode de réalisation de l'art antérieur,
- La figure 3 est une vue latérale d'un dispositif d'échange thermique qui illustre un mode de réalisation de l'art antérieur,
- La figure 4 est une vue latérale partielle d'un ensemble moteur qui illustre un mode de réalisation de l'invention,
- La figure 5 est une vue latérale d'un dispositif d'échange thermique qui illustre un mode de réalisation de l'invention,
- Les figures 6 et 7 sont des vues en perspective d'un échangeur thermique équipé d'un système de régulation qui illustre un mode de réalisation de l'invention respectivement en position ouverte et en position fermée.

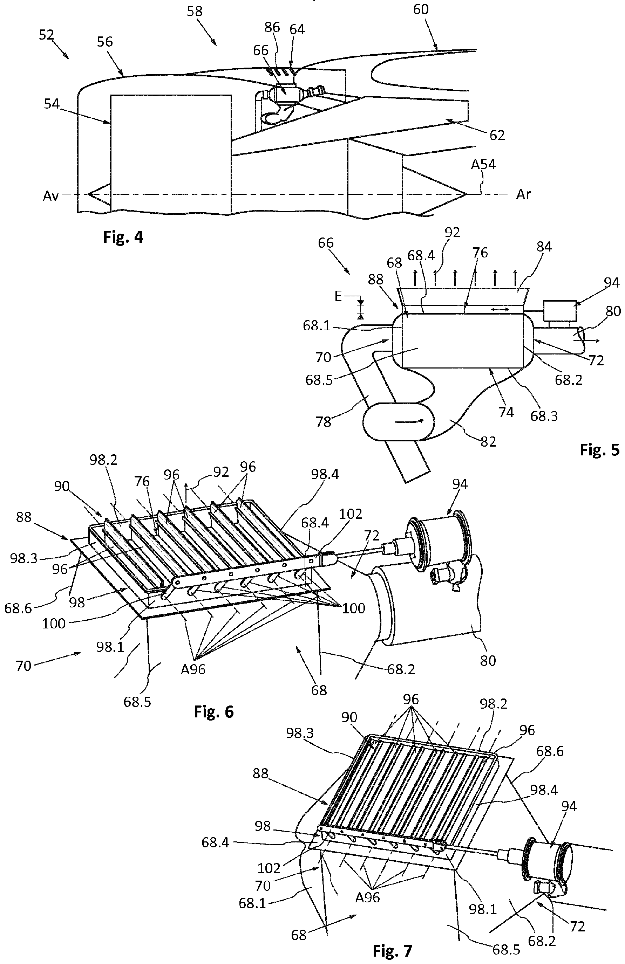

Sur la figure 4, on a représenté un ensemble moteur 52 qui comprend :
- un moteur 54 dans lequel circule un flux primaire d'air,
- une nacelle 56 positionnée autour du moteur 54 de manière à délimiter avec ce dernier un conduit annulaire dans lequel s'écoule un flux secondaire d'air froid, et
- un mât 58 qui assure la liaison entre le moteur 56 et une voilure 60 d'un aéronef.

Le mât 58 comprend une structure primaire 62 rigide, qui assure entre autres la transmission des efforts entre le moteur 54 et le reste de l'aéronef, et une structure secondaire 64 qui enveloppe la structure primaire 62 et qui limite la traînée du mât 58.

Tous ces éléments de l'ensemble moteur ne sont pas plus décrits car ils peuvent être identiques à ceux de l'art antérieur.

Pour la suite de la description, une direction longitudinale est une direction parallèle à l'axe moteur A54. Un plan transversal est un plan perpendiculaire à la direction longitudinale. Un plan longitudinal horizontal est un plan parallèle à la direction longitudinale et horizontal. Un plan longitudinal vertical est un plan parallèle à la direction longitudinale et vertical. Les termes avant et arrière font référence au sens d'écoulement des flux d'air à l'intérieur du moteur 54 qui pénètrent à l'avant Av du moteur 54 et qui sortent à l'arrière Ar du moteur 54. Au moins un ensemble moteur 52 comprend au moins un dispositif d'échange thermique 66 configuré pour refroidir de l'air chaud prélevé au niveau des étages de compression du moteur 54 et destiné aux systèmes de climatisation et de pressurisation de l'aéronef , de dégivrage de la voilure et/ou à tout autre système de l'aéronef.

Selon un mode de réalisation visible sur les figures 5 à 7, chaque dispositif d'échange thermique 66 comprend un échangeur thermique 68 qui a une forme parallélépipédique et qui présente une face avant 68.1 orientée vers l'avant Av du moteur 54, une face arrière 68.2 orientée vers l'arrière Ar du moteur 54, une face longitudinale horizontale inférieure 68.3, une face longitudinale horizontale supérieure 68.4, une face longitudinale verticale droite 68.5 et une face longitudinale verticale gauche 68.6.

L'échangeur thermique 68 comprend un premier circuit d'air chaud reliant une première entrée 70 positionnée sur la face avant 68.1 et une première sortie 72 positionnée sur la face arrière 68.2 ainsi qu'un deuxième circuit d'air froid reliant une deuxième entrée 74 positionnée sur la face longitudinale horizontale inférieure 68.3 et une deuxième sortie 76 positionnée sur la face longitudinale horizontale supérieure 68.4.

La deuxième sortie 76 de l'échangeur thermique 68 a une section carrée ou rectangulaire.

Le dispositif d'échange thermique 66 comprend également :
- un conduit d'alimentation en air chaud 78 qui est configuré pour prélever de l'air chaud au niveau du moteur 54 et qui est connecté à la première entrée 70,
- un conduit de sortie d'air chaud 80 connecté à la première sortie 72,
- un conduit d'alimentation en air froid 82 qui est configuré pour prélever de l'air froid dans le flux secondaire d'air froid et qui est connecté à la deuxième entrée 74,
- un conduit d'échappement 84 qui est configuré pour rejeter de l'air à l'extérieur de l'aéronef via au moins une grille de sortie 86 et qui est connecté à la deuxième sortie 76.

Le conduit d'alimentation en air chaud 78, le conduit de sortie d'air chaud 80, le conduit d'alimentation en air froid 82 et le conduit d'échappement 84 ne sont pas plus détaillés car ils peuvent être identiques à ceux de l'art antérieur.

Le dispositif d'échange thermique comprend un système de régulation 88 configuré pour ajuster le débit d'un flux d'air 92 circulant dans le deuxième circuit d'air froid de l'échangeur thermique 68.

Ce système de régulation 88 comprend :
- un obturateur 90 configuré pour occuper un état fermé dans lequel il empêche la circulation du flux d'air 92 et des états plus ou moins passants dans lesquels il autorise la circulation du flux d'air 92 avec un débit plus ou moins important,
- un actionneur 94 configuré pour contrôler la position de l'obturateur 90.

Selon une caractéristique de l'invention, l'obturateur 90 est positionné en aval de l'échangeur thermique 68, au niveau de la face longitudinale supérieure 68.4, et il est configuré pour obturer la deuxième sortie 76 de l'échangeur thermique 68. Le fait de positionner l'obturateur 90 en aval de l'échangeur thermique 68 permet de réduire la distance entre la zone de prélèvement de l'air froid dans le flux secondaire et l'échangeur thermique 68.

Selon une caractéristique de l'invention, l'obturateur 90 comprend une pluralité de volets 96, chacun des volets 96 comprenant un axe de pivotement A96, les axes de pivotement A96 des différents volets étant parallèles entre eux et sécants avec la direction du flux d'air 92, les volets 96 étant simultanément mobiles en rotation autour de leur axe de pivotement A96 entre une position fermée dans laquelle les volets 96 sont jointifs, ce qui correspond à l'état fermé de l'obturateur 90, et une position ouverte dans laquelle les volets 96 sont plus ou moins écartés, ce qui correspond à l'état plus ou moins passant de l'obturateur 90.

Le fait de prévoir plusieurs volets 96 permet de réduire l'épaisseur E de l'obturateur 90 et de le rapprocher au plus près de l'échangeur thermique 68. Ainsi, on obtient un ensemble compact.

Selon une configuration, les axes de pivotement A96 sont parallèles à la face longitudinale horizontale supérieure 68.4 de l'échangeur thermique 68 et sont coplanaires. Ainsi, en position fermée, les volets 96 sont approximativement en position horizontale, comme illustré sur la figure 7, et, à l'état totalement passant (débit maximum), les volets 96 sont approximativement en position verticale, comme illustré sur la figure 6.

Chaque volet 96 est rectangulaire et son axe de pivotement A96 est positionné au niveau d'une médiatrice parallèle au grand côté du rectangle.

Les volets 96 sont tous identiques et les axes de pivotement A96 sont espacés d'une distance telle que les volets sont jointifs, de préférence légèrement chevauchants, en position fermée. Selon un mode de réalisation, l'obturateur 90 comprend un cadre 98 qui présente quatre parois latérales parallèles au flux d'air 92, deux parois longitudinales 98.1, 98.2 parallèles à la direction longitudinale et deux parois transversales 98.3, 98.4 perpendiculaires à la direction longitudinale.

Le cadre 98 a une section de passage sensiblement identique à celle de la deuxième sortie 76 de l'échangeur thermique 68 et il est positionné entre la deuxième sortie 76 et le conduit d'échappement 84 afin de canaliser le flux d'air 92 entre l'échangeur thermique 68 et le conduit d'échappement 84.

Les extrémités des axes de pivotements A96 des volets 96 sont supportées par les parois longitudinales 98.1 et 98.2 du cadre 98. A cet effet, chaque paroi latérale longitudinale 98.1, 98.2 comprend, pour chaque extrémité des axes de pivotement A96, un orifice ajusté à l'axe de pivotement de sorte que chaque volet 96 puisse pivoter par rapport aux parois longitudinales 98.1 et 98.2 du cadre 98.

Chaque volet 96 a une longueur sensiblement égale à la distance qui sépare les parois longitudinales 98.1, 98.2 du cadre et a une largeur très légèrement supérieure à la distance qui sépare les axes de pivotement A96.

L'obturateur comprend, pour chaque volet, un bras 100 qui s'étend selon une direction perpendiculaire à l'axe de pivotement A96 et qui présente une première extrémité reliée de manière rigide à l'une des extrémités de l'axe de pivotement A96 du volet 96 et une deuxième extrémité reliée de manière pivotante à une tringle 102. Les bras 100 sont positionnés à l'extérieur du cadre 98.

Pour assurer un mouvement simultané de tous les volets 96, tous les bras 100 des différents volets 96 sont reliés à la même tringle 102 qui est reliée à l'actionneur 94.

L'actionneur 94 est configuré pour déplacer la tringle 102 selon une direction de déplacement approximativement parallèle à la direction longitudinale entre une première position correspondant à l'état ouvert de l'obturateur 90, comme illustré sur la figure 6, et une deuxième position correspondant à l'état fermé de l'obturateur 90, comme illustré sur la figure 7.

Selon une caractéristique de l'invention, la tringle 102 et l'actionneur 94 sont disposés selon une direction parallèle à la direction de déplacement qui est approximativement parallèle à une portion du conduit d'alimentation 78 reliée à la première entrée 70 et/ou une portion du conduit de sortie d'air chaud 80 reliée à la première sortie 72. Ainsi, l'actionneur 94 peut être accolé, et éventuellement relié, à la portion du conduit d'alimentation 78 reliée à la première entrée 70 et/ou à la portion du conduit de sortie d'air chaud 80 reliée à la première sortie 72. Cette configuration contribue à obtenir un ensemble compact.

Le fait d'obtenir un dispositif d'échange thermique plus compact permet de pouvoir l'éloigner de la voilure et par conséquent de limiter l'impact de l'air sortant via la grille de sortie 86 sur la voilure.

Grâce à sa position, l'obturateur est plus accessible pour la maintenance. En effet, il suffit de retirer la grille de sortie 86 pour y avoir accès.

Enfin, l'invention n'est pas limitée au positionnement de l'échangeur thermique 68 et de l'obturateur 90 au-dessus de la structure primaire du mât. Grâce à sa très grande compacité, l'ensemble échangeur thermique 68 et obturateur 90 peut être positionné dans la structure primaire du mât ou au-dessous de la structure primaire du mât.

## Revendications

1. Mât d'aéronef comprenant un dispositif d'échange thermique comportant :
- un échangeur thermique (68) qui comprend un premier circuit d'air chaud reliant une première entrée (70) et une première sortie (72) ainsi qu'un deuxième circuit d'air froid reliant une deuxième entrée (74) et une deuxième sortie (76) prolongée par un conduit d'échappement (84),
- un système de régulation (88) configuré pour ajuster un débit d'un flux d'air (92) circulant dans le deuxième circuit d'air froid de l'échangeur thermique (68) qui comprend :
o un obturateur (90) configuré pour occuper un état fermé dans lequel il empêche la circulation du flux d'air (92) et des états plus ou moins passants dans lesquels il autorise la circulation du flux d'air (92) avec un débit plus ou moins important,
o un actionneur (94) configuré pour contrôler l'état de l'obturateur (90), **caractérisé en ce que** l'obturateur (90) comprend une pluralité de volets (96), chacun des volets (96) comprenant un axe de pivotement (A96), les axes de pivotement (A96) des différents volets (96) étant parallèles entre eux et sécants avec la direction du flux d'air (92), les volets (96) étant simultanément mobiles en rotation autour de leur axe de pivotement (A96) entre une position fermée dans laquelle les volets (96) sont jointifs, ce qui correspond à l'état fermé de l'obturateur (90), et une position ouverte dans laquelle les volets (96) sont écartés, ce qui correspond à l'état passant de l'obturateur (90).

2. Mât d'aéronef selon la revendication 1, **caractérisé en ce que** l'obturateur (90) est positionné en aval de l'échangeur thermique (68).

3. Mât d'aéronef selon la revendication 2, **caractérisé en ce que** la deuxième sortie (76) de l'échangeur thermique (68) a une section carrée ou rectangulaire, **en ce que** l'obturateur (90) comprend un cadre (98) positionné entre la deuxième sortie (76) et le conduit d'échappement (84), ledit cadre présentant deux parois longitudinales (98.1, 98.2) et deux parois transversales (98.3, 98.4) tout en ayant une section de passage sensiblement identique à celle de la deuxième sortie (76) de l'échangeur thermique (68), et **en ce que** les extrémités des axes de pivotement (A96) des volets (96) sont montées pivotantes par rapport aux parois longitudinales (98.1, 98.2) du cadre (98).

4. Mât d'aéronef selon l'une des revendications précédentes, **caractérisé en ce que** l'obturateur comprend, pour chaque volet, un bras (100) s'étendant selon une direction perpendiculaire à l'axe de pivotement (A96) et présentant une première extrémité reliée de manière rigide à l'une des extrémités de l'axe de pivotement (A96) du volet (96), tous les bras (100) des différents volets (96) étant reliés à une même tringle (102) qui est reliée à l'actionneur (94).

5. Mât d'aéronef selon la revendication précédente, **caractérisé en ce que** l'actionneur (94) est configuré pour déplacer la tringle (102) selon une direction de déplacement qui est approximativement parallèle à une portion d'un conduit d'alimentation (78) reliée à la première entrée (70), la tringle (102) et l'actionneur (94) étant disposés selon une direction parallèle à la direction de déplacement.

6. Mât d'aéronef selon la revendication 4 ou 5, **caractérisé en ce que** l'actionneur (94) est configuré pour déplacer la tringle (102) selon une direction de déplacement qui est approximativement parallèle à une portion d'un conduit de sortie d'air chaud (80) reliée à la première sortie (72), la tringle (102) et l'actionneur (94) étant disposés selon une direction parallèle à la direction de déplacement.

7. Aéronef comprenant un mât selon l'une des revendications précédentes.

## Patentansprüche

1. Pylon eines Luftfahrzeugs, welcher eine Wärmeaustauschvorrichtung umfasst, welche aufweist:
- einen Wärmetauscher (68), welcher einen ersten Heißluftkreislauf, der einen ersten Einlass (70) und einen ersten Auslass (72) verbindet, sowie einen zweiten Kaltluftkreislauf, der einen zweiten Einlass (74) und einen durch einen Austrittskanal (84) verlängerten zweiten Auslass (76) verbindet, umfasst,
- ein Regelungssystem (88), das dafür ausgelegt ist, eine Durchflussmenge eines im zweiten Kaltluftkreislauf des Wärmetauschers (68) zirkulierenden Luftstroms (92) einzustellen, und umfasst:
∘ ein Verschlussstück (90), das dafür ausgelegt ist, einen geschlossenen Zustand, in welchem es die Zirkulation des Luftstroms (92) verhindert, und mehr oder weniger durchlässige Zustände, in welchem es die Zirkulation des Luftstroms (92) mit einer mehr oder weniger großen Durchflussmenge ermöglicht, einzunehmen,
∘ einen Aktuator (94), der dafür ausgelegt ist, den Zustand des Verschlussstücks (90) zu steuern,
**dadurch gekennzeichnet, dass** das Verschlussstück (90) mehrere Klappen (96) umfasst, wobei jede der Klappen (96) eine Schwenkachse (A96) umfasst, wobei die Schwenkachsen (A96) der verschiedenen Klappen (96) zueinander parallel sind und sich mit der Richtung des Luftstroms (92) schneiden, wobei die Klappen (96) gleichzeitig drehbeweglich um ihre Schwenkachse (A96) sind zwischen einer geschlossenen Position, in welcher die Klappen (96) aneinanderstoßen, was dem geschlossenen Zustand des Verschlussstücks (90) entspricht, und einer geöffneten Position, in welcher die Klappen (96) beabstandet sind, was dem durchlässigen Zustand des Verschlussstücks (90) entspricht.

2. Pylon eines Luftfahrzeugs nach Anspruch 1, **dadurch gekennzeichnet, dass** das Verschlussstück (90) stromabwärts des Wärmetauschers (68) positioniert ist.

3. Pylon eines Luftfahrzeugs nach Anspruch 2, **dadurch gekennzeichnet, dass** der zweite Auslass (76) des Wärmetauschers (68) einen quadratischen oder rechteckigen Querschnitt aufweist,
dadurch, dass das Verschlussstück (90) einen Rahmen (98) umfasst, der zwischen dem zweiten Auslass (76) und dem Austrittskanal (84) positioniert ist, wobei der Rahmen zwei Längswände (98.1, 98.2) und zwei Querwände (98.3, 98.4) aufweist und dabei einen Durchflussquerschnitt hat, der im Wesentlichen mit demjenigen des zweiten Auslasses (76) des Wärmetauschers (68) identisch ist, und
dadurch, dass die Enden der Schwenkachsen (A96) der Klappen (96) schwenkbar bezüglich der Längswände (98.1, 98.2) des Rahmens (98) gelagert sind.

4. Pylon eines Luftfahrzeugs nach einem der vorhergehenden Ansprüche,
**dadurch gekennzeichnet, dass** das Verschlussstück für jede Klappe einen Arm (100) umfasst, der sich in einer zur Schwenkachse (A96) senkrechten Richtung erstreckt und ein erstes Ende aufweist, das auf starre Weise mit einem der Enden der Schwenkachse (A96) der Klappe (96) verbunden ist, wobei alle Arme (100) der verschiedenen Klappen (96) mit ein und derselben Leiste (102) verbunden sind, welche mit dem Aktuator (94) verbunden ist.

5. Pylon eines Luftfahrzeugs nach dem vorhergehenden Anspruch, **dadurch gekennzeichnet, dass** der Aktuator (94) dafür ausgelegt ist, die Leiste (102) in einer Verschiebungsrichtung zu verschieben, welche annähernd parallel zu einem Abschnitt einer mit dem ersten Einlass (70) verbundenen Zuführungsleitung (78) ist, wobei die Leiste (102) und der Aktuator (94) in einer Richtung angeordnet sind, die zu der Verschiebungsrichtung parallel ist.

6. Pylon eines Luftfahrzeugs nach Anspruch 4 oder 5, **dadurch gekennzeichnet, dass** der Aktuator (94) dafür ausgelegt ist, die Leiste (102) in einer Verschiebungsrichtung zu verschieben, welche annähernd parallel zu einem Abschnitt einer mit dem ersten Auslass (72) verbundenen Heißluft-Auslassleitung (80) ist, wobei die Leiste (102) und der Aktuator (94) in einer Richtung angeordnet sind, die zu der Verschiebungsrichtung parallel ist.

7. Luftfahrzeug, welches einen Pylon nach einem der vorhergehenden Ansprüche umfasst.

## Claims

1. Aircraft pylon comprising a heat exchange device including:
- a heat exchanger (68) which comprises a first hot air circuit connecting a first inlet (70) and a first outlet (72), and a second cold air circuit connecting a second inlet (74) and a second outlet (76) that is extended by an exhaust duct (84),
- a regulating system (88) that is configured to adjust a flow rate of a flow of air (92) flowing in the second cold air circuit of the heat exchanger (68), and that comprises:
∘ an obturator (90) configured to adopt a closed state in which it prevents the flow of air (92) from flowing, and more- or less-permissive states in which it allows the flow of air (92) to flow with a higher or lower flow rate,
∘ an actuator (94) configured to control the state of the obturator (90),
**characterized in that** the obturator (90) comprises a plurality of slats (96), each of the slats (96) comprising a pivot axis (A96), the pivot axes (A96) of the various slats (96) being mutually parallel and intersecting the direction of the flow of air (92), the slats (96) being simultaneously mobile in rotation about their pivot axis (A96) between a closed position in which the slats (96) are contiguous, which corresponds to the closed state of the obturator (90), and an open position in which the slats (96) are spread apart, which corresponds to the permissive state of the obturator (90) .

2. Aircraft pylon according to Claim 1, **characterized in that** the obturator (90) is positioned downstream of the heat exchanger (68).

3. Aircraft pylon according to Claim 2, **characterized in that** the second outlet (76) of the heat exchanger (68) has a square or rectangular cross section, **in that** the obturator (90) comprises a frame (98) positioned between the second outlet (76) and the exhaust duct (84), said frame having two longitudinal walls (98.1, 98.2) and two transverse walls (98.3, 98.4) while having a passage cross section essentially identical to that of the second outlet (76) of the heat exchanger (68), and **in that** the ends of the pivot axes (A96) of the slats (96) are mounted so as to be able to pivot with respect to the longitudinal walls (98.1, 98.2) of the frame (98).

4. Aircraft pylon according to one of the preceding claims, **characterized in that** the obturator comprises, for each slat, an arm (100) extending in a direction perpendicular to the pivot axis (A96) and having a first end rigidly connected to one of the ends of the pivot axis (A96) of the slat (96), all the arms (100) of the various slats (96) being connected to a single bar (102) which is connected to the actuator (94).

5. Aircraft pylon according to the preceding claim, **characterized in that** the actuator (94) is configured to displace the bar (102) in a displacement direction which is approximately parallel to a portion of a supply duct (78) connected to the first inlet (70), the bar (102) and the actuator (94) being arranged in a direction parallel to the displacement direction.

6. Aircraft pylon according to Claim 4 or 5, **characterized in that** the actuator (94) is configured to displace the bar (102) in a displacement direction which is approximately parallel to a portion of a hot air outlet duct (80) connected to the first outlet (72), the bar (102) and the actuator (94) being arranged in a direction parallel to the displacement direction.

7. Aircraft comprising a pylon according to one of the preceding claims.
